# EUROPEAN PATENT APPLICATION

(11) **EP 2 309 729 A1**
(43) Date of publication of application: **13.04.2011**
(21) Application number: 10175558.5
(22) Date of filing: 07.09.2010
(51) Int. Cl.: H04N 5/44, H04N 5/445

(54) **Program information display control apparatus and program information display control method**

(30) Priority: 15.09.2009 JP 2009213617
(71) Applicant: Kabushiki Kaisha Toshiba, Tokyo 105-8001 (JP)
(72) Inventor: Kimura, Takahiro, Tokyo 105-8001 (JP); Miyazawa, Akira, Tokyo 105-8001 (JP); Kuwahara, Kazuki, Tokyo 105-8001 (JP)
(74) Representative: HOFFMANN EITLE

(57) **Abstract**

According to one embodiment, a program information display control apparatus includes a receiver (102, 103), a display controller (110), a selector (110), and a display format changer (111). The receiver is configured to receive program information on each channel. The display controller is configured to control a list display of the program information on each channel. The selector is configured to select one item of program information on the list display on the basis of an input instruction to select one item of program information. The display format changer configured to change a first display format of the selected program information to a second display format when a specific period has elapsed since the program information was selected by the selector.

## Description

Embodiments described herein relate generally to a program information display control apparatus and a program information display control method which receive program information on each channel and control the display of program information.

In recent years, recording and reproducing apparatuses capable of recording and reproducing digital television broadcasting have been widely used. For example, a recording and reproducing apparatus records digital television broadcasting with an HDD or a DVD. The storage capacity of an information storage medium, such as an HDD, is increasing year by year. Accordingly, recording and reproducing apparatuses using those information storage mediums and television receivers with a recording function using the information storage mediums can record a large number of programs.

Furthermore, recording and reproducing apparatuses can acquire service information from a digital television broadcast signal and control the display of a program list on the basis of the service information. In addition, television receivers can display a program list. For example, television receivers can display a several-hour program list on a plurality of channels. Such a program list is referred to as an electronic program guide (EPG).

Jpn. Pat. Appln. KOKAI Publication No. 2006-100949 has disclosed the technique for enlarging an image of the contents of a display selected from a program content column. Similarly, Jpn. Pat. Appln. KOKAI Publication No. 2007-19906 has disclosed the technique for popping up a program display area selected with the cursor move key.

However, when the selected display content is enlarged and displayed immediately, another display content displayed adjacent to the selected one might disappear from the screen. Similarly, when the selected program display area is popped up, another program display area displayed adjacent to the selected one might disappear from the screen.

A general architecture that implements the various feature of the embodiments will now be described with reference to the drawings. The drawings and the associated descriptions are provided to illustrate the embodiments and not to limit the scope of the invention.
FIG. 1 schematically shows the configuration of a digital television broadcast receiver (or an image receiving apparatus) according to an embodiment;
FIG. 2 shows an example of the list display of program information on each channel, particularly of specific program information immediately after the information is selected; and
FIG. 3 shows an example of the list display of program information on each channel, particularly of specific program information after a specific period has elapsed since the information was selected.

Various embodiments will be described hereinafter with reference to the accompanying drawings.

In general, according to one embodiment, a program information display control apparatus includes a receiver, a display controller, a selector, and a display format changer. The receiver is configured to receive program information on each channel. The display controller is configured to control a list display of the program information on each channel. The selector is configured to select one item of program information on the list display on the basis of an input instruction to select one item of program information. The display format changer configured to change a first display format of the selected program information to a second display format when a specific period has elapsed since the program information was selected by the selector.

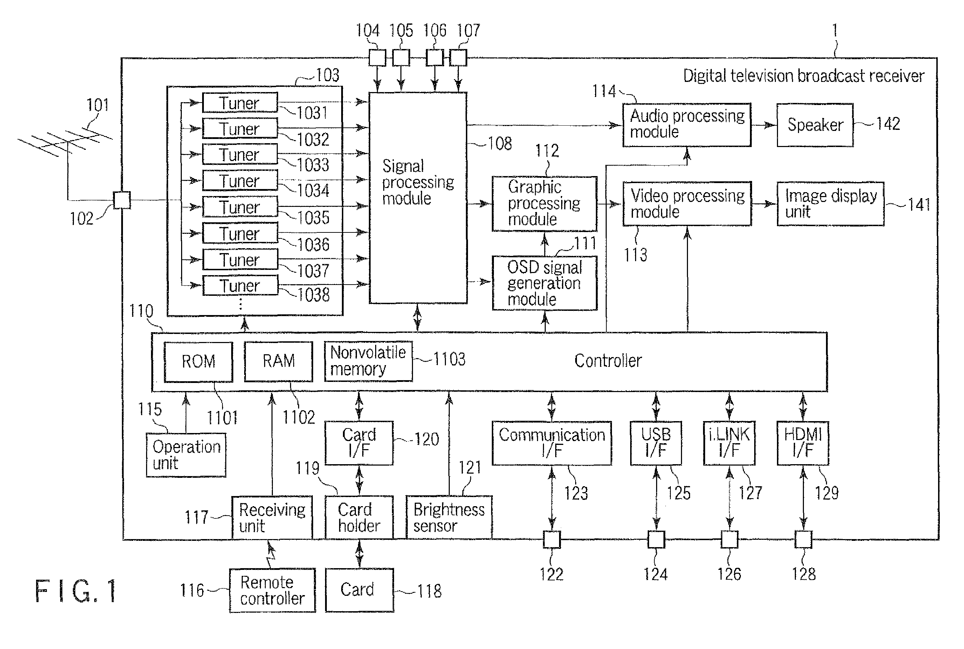

FIG. 1 schematically shows the configuration of a digital television broadcast receiver (or an image receiving apparatus) according to an embodiment. As shown in FIG. 1, the digital television broadcast receiver 1 comprises an antenna 101, an input terminal 102, a tuner unit 103, external input terminals 104 to 107, a signal processing module 108, a controller 110, an OSD signal generation module 111, a graphic processing module 112, a video processing module 113, an audio processing module 114, an operation unit 115, a receiving unit 117, a card holder 119, a card interface 120, a brightness sensor 121, a LAN terminal 122, a communication interface 123, a USB terminal 124, a USB interface 125, an iLINK terminal 126, an iLINK interface 127, an HDMI terminal 128, an HDMI interface 129, an image display unit 141, and a speaker 142.

The tuner unit 103 includes not only terrestrial digital television broadcast tuners 1031 to 1038 but also a digital direct-broadcasting-by-satellite (DBS) television tuner. Digital television program lists can be received and displayed with the digital television broadcast tuners 1031 to 1038. Digital DBS television program lists can be received and displayed with the digital DBS television broadcast tuner.

In the embodiment, a case where the digital television broadcast receiver 1 includes the image display unit 141 and speaker 142 as shown in FIG. 1 will be explained. That is, a case where a program information display control apparatus of the embodiment includes the image display unit 141 and speaker 142 will be explained. However, the program information display control apparatus is not limited to such a configuration. For example, the program information display control apparatus may be configured to include neither the image display unit 141 nor speaker 142. In other words, the program information display control apparatus may be configured to connect with the image display unit 141 and speaker 142 via connection means, such as HDMI.

Hereinafter, the digital television broadcast receiver 1 will be explained in detail.

The terrestrial digital television broadcast signal received by the antenna 101 for receiving terrestrial broadcasting is supplied to the tuners 1031 to 1038 via the input terminal 102. The terrestrial digital television broadcast signal processing modules of the tuners 1031 to 1038 select digital television broadcast signals on desired channels. The digital television broadcast signals selected by the tuners 1031 to 1038 are supplied to an orthogonal frequency division multiplexing (OFDM) demodulation module, which demodulates the broadcast signals into digital video signals and audio signals and then outputs the video and audio signals to the signal processing module 108.

The signal processing module 108 then selectively subjects the digital video and audio signals supplied from the OFDM demodulation module to a specific digital signal process and outputs the resulting signals to the graphic processing module 112 and audio processing module 114.

To the signal processing module 108, for example, four input terminals 104 to 107 are connected. The input terminals 104 to 107 enable analog video and audio signals to be input from outside the digital television broadcast receiver 1.

The signal processing module 108 selectively digitizes the analog video and audio signals supplied from the input terminals 104 to 107, subjects the digitized video and audio signals to a specific digital signal process, and then outputs the resulting signals to the graphic processing module 112 and audio processing module 114.

The graphic processing module 112 has the function of superimposing an on-screen display (OSD) signal generated by an OSD signal generation module 111 onto the digital video signal supplied from the signal processing module 108. The graphic processing module 112 can not only selectively output the output video signal from the signal processing module 108 and the output OSD signal from the OSD signal generation module 111 but also combine the two outputs so that each of them may constitute half of the screen and output the resulting signal.

The digital video signal output from the graphic processing module 112 is supplied to the video processing module 113. The video signal processed by the video processing module 113 is supplied to the image display unit 141. The image display unit 141 displays an image based on the video signal.

The audio processing module 114 converts the input digital audio signal into an analog audio signal in a format that can be reproduced by the speaker 142 and outputs the resulting signal to the speaker 142, which then reproduces sound.

In the digital television broadcast receiver 1, all of the operations, including the aforementioned various receiving operations, are comprehensively controlled by the controller 110. The controller 110, which comprises a central processing unit (CPU), receives operating information (various instructions) from the operation unit 115 or operating information (various instructions) sent from a remote controller 116 and received via a light-receiving unit 117 and controls the individual modules and others so that the nature of the operation may be reflected.

In addition, the controller 110 further comprises a read-only memory (ROM) 1101 which stores a control program executed by the CPU, a random access memory (RAM) 1102 which provides the CPU with a work area, and a nonvolatile memory 1103 in which various items of setting data and control data are stored.

The controller 110 is connected via a card interface 120 to a card holder 119 in which a memory card 118 can be installed. This enables the controller 110 to exchange data with the memory card 118 installed in the card holder 119 via the card interface 120.

The controller 110 is further connected to the LAN terminal 122 via the communication interface 122. This enables the controller 110 to exchange data via the communication interface 123 with a LAN-compatible device connected to the LAN terminal 21. In this case, the controller 110, which has a dynamic host configuration protocol (DHCP) server function, allocates an Internet protocol (IP) address to a LAN-compatible device connected to the LAN terminal 122 and controls the device.

The controller 110 is further connected to the HDMI terminal 128 via the HDMI interface 129. This enables the controller 110 to exchange data via the HDMI interface 129 with an HDMI-compatible device connected to the HDMI terminal 128.

The controller 110 is further connected to the USB terminal 124 via the USB interface 125. This enables the controller 110 to exchange data via the USB interface 125 with a USB-compatible device connected to the USB terminal 124.

The controller 110 is further connected to the iLINK terminal 126 via the iLINK interface 127. This enables the controller 110 to exchange data via the iLINK interface 127 with an iLINK-compatible device connected to the iLINK terminal 126.

Moreover, the controller 110 is configured to receive a brightness sense signal from the brightness sensor 121. This enables the controller 110 to control the brightness or the like of an image and a backlight on the basis of the brightness sense signal.

Furthermore, the controller 110 can control a video recording operation to record a broadcast signal selected and decrypted by the tuner unit 103 on an HDD or the like connected via the LAN terminal 122 or USB terminal 124. Since the tuner unit 103 includes tuners, it can record or display programs on channels. For example, the digital television broadcast receiver 1 can record all the programs for one week on channels with high-definition image quality. Such video recording is referred to as multiple simultaneous video recording. To realize the multiple simultaneous video recording, the digital television broadcast receiver 1 includes tuners corresponding to channels and further includes card slots into which decryption cards corresponding to the tuners are to be inserted in order to deal with encrypted broadcasting.

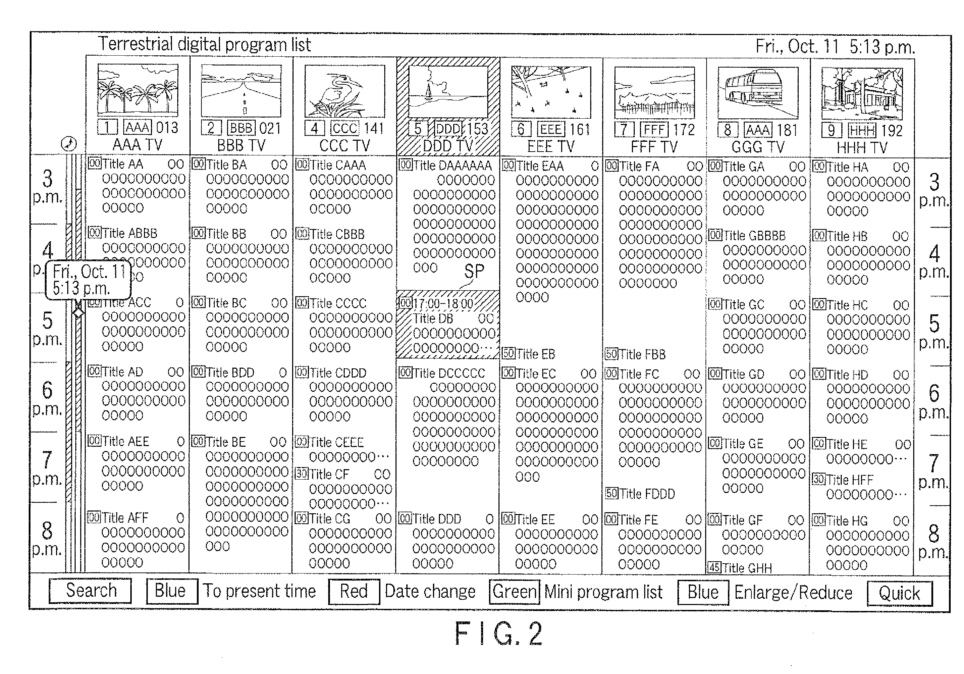

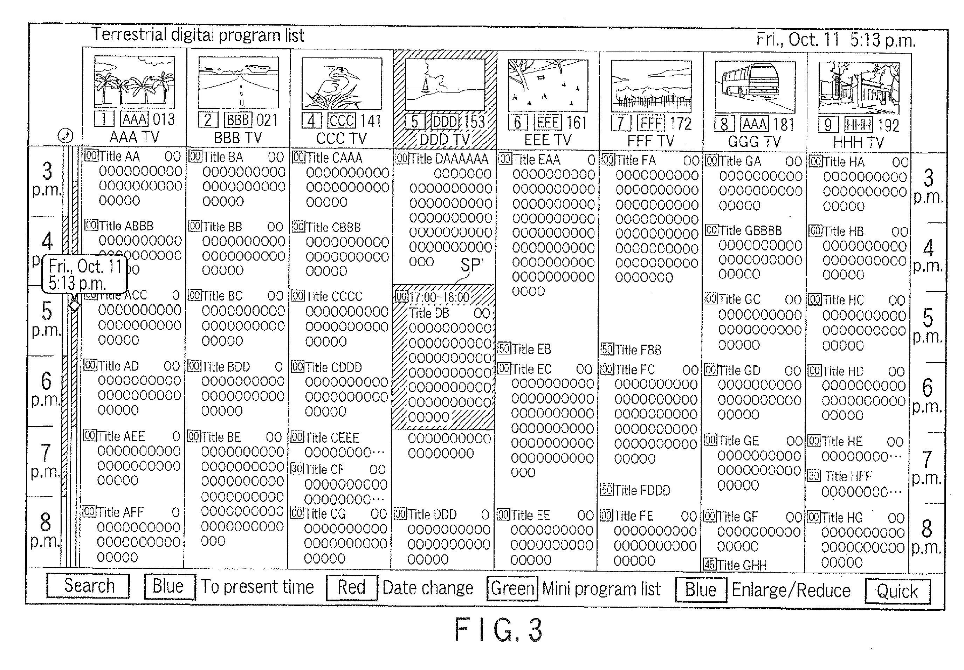

Next, display control of a program list will be explained with reference to FIGS. 2 and 3. The digital television broadcast receiver 1 receives a terrestrial digital television broadcast signal via the antenna 101 and the signal processing module can detect service information from the received signal. The service information includes, for example, program information for 8 days on each channel.

On the basis of program information on each channel and an instruction to select specific program information (a column of a specific program), an on-screen display (OSD) signal generation module 111 generates an OSD signal (first display information) to display a first program list shown in, for example, FIG. 2. Alternatively, when there has been no new select instruction since program information on each channel and specific program information (a column of a specific program) were selected and a specific period has elapsed, the OLD signal generation module 111 generates an OSD signal (second display information) to display a second program list shown in, for example, FIG. 3.

For example, as shown in FIGS. 2 and 3, each of the first and second program lists includes program information on each channel corresponding to a time range of 6 hours. For example, program information on one program included in each of the first and second program lists includes a title and information on the contents of the program. The top line of each of the first and second program lists includes the following items of information: images now being broadcast on each channel, channel number of each channel, channel logo of each channel, and channel name of each channel. The left end of each of the first and second program lists includes two record bars. The two record bars show time zones for which the user has programed recording on a program basis. Recording displayed by the two record bars is program-specified recording and differs from the multiple simultaneous video recording. The right end of each of the first and second program lists includes the present time and date information (e.g., 5:13 p.m., Friday, 10/13). In addition, each of the first and second program lists displays the channel (e.g., channel 5, DDDTV) selected before the display of the program list in distinction from the other channels.

For example, with the program list being displayed, the user can operate a cursor move button provided on the remote controller 116 to select one program on the program list (or the column of one program). On the basis of a select instruction from the remote controller 116, the controller 110 selects one program on the program list. In response to the selection of the program, the OSD signal generation module 111 changes the display format of the selected program information SP from a standard display format to a first display format (see FIG. 2).

For example, in the standard display format, characters are displayed in a first color (e.g., black) and the background of characters is displayed in a second color (e.g., white). Unselected program information other than the selected program information SP on the program list shown in FIG. 2 is displayed in the standard display format. In the first display format, characters are displayed in a third color (e.g., black) and the background of characters is displayed in a fourth color (e.g., green or blue). The selected program information SP on the program list shown in FIG. 2 is displayed in the first display format. The standard display format includes a program title and a part of the contents of the program. The first display format includes a program start time, a program end time, a program title, and a part of the contents of the program. The first display format may include at least one of a program start time and a program end time.

When there has been no new cursor move instruction since the selected program information SP was selected and a specific period has elapsed, the OSD signal generation module 111 changes the display format of the selected program information SP from the first display format to the second display format (the selected program information SP of FIG. 2 is updated to the selected program information SP' of FIG. 3). The specific period is, for example, 2 or 3 seconds. An arbitrary period in the range of 1 to 60 seconds can be set as the specific period. When the display format of the selected program information SP is changed from the first display format to the second display format, the way the area of the selected program information SP (one item of program information) is extending downward and expanding may be displayed in animation. That is, the OSD signal generation module 111 can generate an OSD signal for animation display. Alternatively, when the display format of the selected program information SP is changed from the first display format to the second display format, the area of the selected program information SP (one item of program information) may be displayed so as to extend instantaneously.

For example, the first display format is a display format in which the selected program information SP is displayed in a first display size. The second display format is a display format in which the selected program information SP' is displayed in a second display size larger than the first display size. The standard display format is a display format in which program information is displayed in the first display size.

Alternatively, the first display format is a display format in which the selected program information SP is displayed in a first display size and a first information amount. The second display format is a display format in which the selected program information SP' is displayed in a second display size larger than the first display size and a second information amount greater than the first information amount. The standard display format is a display format in which program information is displayed in the first information amount.

Alternatively, the first display format is a display format in which the selected program information SP is displayed in a first display size and a first character size. The second display format is a display format in which the selected program information SP' is displayed in a second display size larger than the first display size and a second character size larger than the first character size. The standard display format is a display format in which program information is displayed in the first character size.

Alternatively, the first display format is a display format in which the selected program information SP is displayed in a first display size, a first information amount, and a first character size. The second display format is a display format in which the selected program information SP' is displayed in a second display size larger than the first display size, a second information amount greater than the first information amount, and a second character size larger than the first character size. The standard display format is a display format in which program information is displayed in the first display size, the first information amount, and the first character size.

As described above, the selected program information SP is displayed in the first display size and the selected program information SP' is displayed in the second display size larger than the first display size. Accordingly, the selected program information SP does not cover program information excluding the selected program information SP, but the selected program information SP' may cover at least one item of program information excluding the selected program information SP'. More specifically, the selected program information SP' may cover at least one item of program information on the channel to which the selected program information SP' belongs.

As described above, when there has been no new cursor move instruction and a specific period has elapsed since the selected program information SP was selected, the digital television broadcast receiver changes the first display format of the selected program information SP to the second display format. In other words, the digital television broadcast receiver displays the selected program information SP in the first display format immediately after the selected program information SP is selected. With this display, immediately after the selected program information SP is selected, the user can distinguish between the selected program information SP (in the first display format) and program information (in the standard display format) excluding the selected program information SP and check the contents of the selected program information SP and the program information excluding the selected program information SP with the remaining program information being uncovered. Therefore, the user can also check program information excluding the selected program information SP with high visibility. When there has been no new cursor move instruction since the selected program information SP was selected and a specific period has elapsed, the user can look at the contents of the selected program information SP (in the second display format) in detail or see the contents of the selected program information SP' in a larger character size.

If the display format of the selected program information SP is changed from the first display format to the second display format immediately after the selected program information is selected, the other program information is covered, making it difficult to check the other program information. The digital television broadcast receiver of the embodiment can prevent such a trouble.

With the recent switchover to digital broadcasting, multichannel broadcasting has become available. To increase visibility, program lists tend to show many channels and time zones on a single screen. Accordingly, the display area of program information corresponding to one program tends to decrease, which may make program information corresponding to a short-time program insufficient. With the digital television broadcast receiver of the embodiment, the display area of specific program information is expanded when there has been no new cursor move operation and a specific period has elapsed since the specific program information (the column of a specific program) corresponding to the specific program was selected. Therefore, the digital television broadcast receiver can provide sufficient program information on the specific program.

## Claims

1. A program information display control apparatus **characterized by** comprising:
a receiver (102, 103) configured to receive program information on each channel;
a display controller (110) configured to control a list display of the program information on each channel;
a selector (110) configured to select one item of program information on the list display on the basis of an input instruction to select one item of program information; and
a display format changer (111) configured to change a first display format of the selected program information to a second display format when a specific period has elapsed since the program information was selected by the selector.

2. The apparatus of Claim 1, **characterized in that** the first display format is configured to have a display format which includes at least either a program start time or a program end time.

3. The apparatus of Claim 1, **characterized in that** the first display format is configured to have a display format which displays the selected program information in a first display size, and
the second display format is configured to have a display format which displays the selected program information in a second display size larger than the first display size.

4. The apparatus of Claim 1, **characterized in that** the first display format is configured to have a display format which displays the selected program information in a first display size and a first information amount, and
the second display format is configured to have a display format which displays the selected program information in a second display size larger than the first display size and a second information amount greater than the first information amount.

5. The apparatus of Claim 1, **characterized in that** the first display format is configured to have a display format which displays the selected program information in a first display size and a first character size, and
the second display format is configured to have a display format which displays the selected program information in a second display size larger than the first display size and a second character size larger than the first character size.

6. The apparatus of Claim 3, **characterized in that** the first display format is configured to have a display format which does not cover program information excluding the selected program information, and
the second display format is configured to have a display format which covers at least one item of program information excluding the selected program information.

7. The apparatus of Claim 3, **characterized in that** the first display format is configured to have a display format which does not cover program information excluding the selected program information, and
the second display format is configured to have a display format which covers at least one item of program information on a channel to which the selected program information belongs.

8. The apparatus of Claim 1, **characterized by** further comprising:
a channel select means configured to select a signal on a specified channel from received broadcast signals,
wherein the display controller is configured to control an image display and a list display of the program information on the basis of the channel select signal.

9. A program information display control method **characterized by** comprising:
receiving program information on each channel;
controlling a list display of the program information on each channel;
selecting one item of program information on the list display on the basis of an input instruction to select one item of program information; and
changing a first display format of the selected program information when a specific period has elapsed since the program information was selected.
